# EUROPEAN PATENT APPLICATION

(11) **EP 4 659 838 A1**
(43) Date of publication of application: **10.12.2025**
(21) Application number: 24750492.1
(22) Date of filing: 25.01.2024
(51) Int. Cl.: B01D 53/04, B01D 53/30, B01D 53/72

(54) **CONCENTRATOR FOR HIGH FLOW RATE GASEOUS SUBSTANCES AND GASEOUS SUBSTANCE TREATMENT SYSTEM INCLUDING SAME**

(30) Priority: 01.02.2023 KR 20230013684; 13.07.2023 KR 20230091321
(71) Applicant: Enbion Inc., Daejeon 34026 (KR)
(72) Inventor: LEE, Hyun Jae, Daejeon 35228 (KR); LEE, Seung Kil, Yongin-si Gyeonggi-do 16998 (KR); PARK, Min Soo, Daejeon 35272 (KR); LEE, Sanggi, Daejeon 34048 (KR); CHO, Min Whee, Cheongju-si Chungcheongbuk-do 28124 (KR)
(74) Representative: Mammel und Maser Patentanwälte PartG mbB
(86) International application number: PCT/KR2024/001180
(87) International publication number: WO 2024/162690

(57) **Abstract**

The present invention relates to a device for highly concentrating gaseous substances and an exhaust gas treatment device for treating the same. The present invention relates to a concentrator for concentrating gaseous substances in exhaust gas, the concentrator comprising: an adsorption member that forms a plurality of functional regions for adsorbing, concentrating, and desorbing the gaseous substances in the exhaust gas; and a driving unit for rotating the adsorption member relative to the exhaust gas. The plurality of functional regions of the adsorption member include an adsorption region, a desorption region, and a cooling region. The concentrator includes: an exhaust gas flow path that flows from a discharge source into the adsorption region; a desorption gas flow path for discharging concentrated gas from the desorption region; a cooling gas flow path that flows into the cooling region; and a recirculation flow path that branches from the desorption gas flow path and merges with the cooling gas flow path. A portion of the concentrated gas in the desorption gas flow path flows into the cooling region through the recirculation flow path.

## Description

### [Technical Field]

The present disclosure relates to an apparatus for concentrating and treating gaseous substances such as odors, carbon dioxide, and volatile organic compounds. More particularly, the present disclosure relates to a gaseous substance treatment apparatus that uses a rotor to highly concentrate and desorb gaseous substances discharged from, for example, large-scale printing processes, large-scale painting processes, sewage treatment processes, carbon dioxide emission facilities, and odor-generating facilities, and to condense, recover, and remove the desorbed substances.

### [Background Art]

Painting facilities with a volume of 50,000 m³ or more, installed in large-scale factories such as shipyards, have been treated as exceptions under regulations on the emission of volatile organic compounds (VOCs). Accordingly, there has been a continued trend of scaling up such painting facilities without implementing volatile organic compound ("VOC") removal measures. In contrast, factories with a volume of 50,000 m³ or less are installed and operated with regenerative thermal oxidizers (RTOs) and regenerative catalytic oxidizers (RCOs). However, since air that has not been highly concentrated is combusted, operating costs have increased, and the use of large-scale equipment has resulted in a lack of installation space.

Due to the strengthening of legal regulations on atmospheric environments, it is very difficult to oxidize gaseous substances containing volatile organic compounds using heat or catalysts. In general, such gaseous substances contain a small amount of combustible components, and thus oxidation systems using high temperatures of 800 °C or higher or catalysts operating at 300 °C or higher consume a large amount of additional energy, making the oxidation systems uneconomical. Accordingly, in recent technologies, regenerative combustion methods that treat low-concentration volatile organic compounds by recovering 95% or more of heat using heat storage materials are widely used. Regenerative combustion methods are oxidation methods that oxidize volatile organic compounds at high temperatures by maintaining an oxidation temperature of 800 °C or higher. In general, when the temperature rise due to the heat of oxidation of volatile organic compounds in the gaseous substances is within the range of 40 to 80 °C per unit cubic meter of gas, operation is possible without additional fuel supply. However, when the temperature rise is 40 °C or lower per unit cubic meter of gas, additional fuel is required. A regenerative combustion method using a catalyst is referred to as a regenerative catalytic combustion method, which allows the combustion temperature to be lowered to 300 to 450 °C, thereby enabling more economical treatment. However, even in this case, when the calorific value per unit cubic meter of gas of volatile organic compounds contained in the gaseous substances does not reach the range of 15 to 30 °C, a large amount of additional energy is consumed. In actual large-scale painting processes, gaseous substances containing odors and volatile organic compounds are often discharged at a high flow rate with low concentrations of volatile organic compounds. Accordingly, in order to combust and oxidize low-concentration odors and volatile organic compounds, additional fuel needs to be supplied, resulting in high energy consumption and maintenance costs of several hundred of million Korean won per year.

As a conventional method for treating low-concentration gaseous substances, Japanese Patent Laid-Open Publication No. 1997-173758 discloses a high-boiling-point solvent recovery apparatus including: a honeycomb-structured rotor supporting an adsorbent; a separator configured to divide a cross-sectional region of the rotor into two regions, an adsorption region and a desorption region; an air blowing unit configured to supply solvent-containing air having a boiling point of 150 to 300°C to the adsorption region and to discharge a portion of the purified gas, which flows out from the opposite cross-section of the rotor, into the atmosphere while supplying the remaining portion to the desorption region; a heating unit configured to heat the purified gas; a cooling unit configured to separate the concentrated solvent gas into a liquefied recovered product and a cooled dilute gas; and a transfer unit configured to return the cooled dilute gas as a raw material. This apparatus is capable of concentrating by a concentration ratio of 5 to 15 times. In such a conventional adsorption concentration unit, an adsorbent such as zeolite, activated carbon, or silica is coated on a honeycomb-shaped ceramic support, and the concentration ratio is determined based on the adsorption capacity of the material.

Meanwhile, Korean Patent No. 2383095 discloses a concentration apparatus for concentrating gaseous substances, including an adsorption member that forms a plurality of functional regions configured to absorb, concentrate, and desorb contaminant components in gas, and a driving unit configured to relatively rotate the adsorption member with respect to the gaseous substances, wherein a portion of the concentrated gas in the desorption gas flow path flows into the adsorption region through the recirculation flow path. This method introduces the concentrated recirculated gas into the adsorption region, so that the gas is further concentrated to a high level, thereby allowing the capacity of the post-treatment system to be reduced However, since more adsorption members are required to re-adsorb the highly concentrated contaminant components, there is a concern that efficiency may be reduced, and an additional energy input is needed to desorb the highly concentrated contaminant components.

### [Disclosure]

### [Technical Problem]

In order to solve the problems of the prior art, the present disclosure provides a gaseous substance treatment system capable of concentrating gaseous substances discharged from an emission source containing a large volume of low-concentration gaseous substances to a high concentration, and using the concentrated substances for combustion, recovery, and condensation treatment, thereby enabling energy savings and effective removal of the gaseous substances.

In addition, the present disclosure provides a gaseous substance treatment system that uses a concentration unit including a plurality of functional regions including an adsorption region, a desorption region, and a cooling region, and concentrates gaseous substances to high concentrations while suppressing an increase in desorption energy.

Furthermore, the present disclosure provides a gaseous substance treatment system that uses a concentration unit including a plurality of functional regions including an adsorption region, a desorption region, and a cooling region, and is capable of concentrating gaseous substances to high concentrations without re-adsorption.

### [Technical Solution]

In view of the foregoing, the present disclosure provides a concentration apparatus for concentrating gaseous substances. The concentration apparatus includes: an adsorption member configured to form a plurality of functional regions for adsorbing, concentrating, and desorbing gaseous substances in exhaust gas discharged from an emission source; and a driving unit configured to relatively rotate the adsorption member with respect to the gaseous substances. The plurality of functional regions of the adsorption member include an adsorption region, a desorption region, and a cooling region. The concentration apparatus further includes: an exhaust gas flow path configured to introduce the exhaust gas from the emission source into the adsorption region; a desorption gas flow path configured to discharge a concentrated gas from the desorption region; a cooling gas flow path configured to introduce a cooling gas into the cooling region; and a recirculation flow path configured to be branched off from the desorption gas flow path and to join the cooling gas flow path. A portion of the concentrated gas in the desorption gas flow path is introduced into the cooling region through the recirculation flow path.

In the present disclosure, the recirculation flow path may include a first valve configured to control a flow rate.

In addition, the exhaust gas flow path may include a second valve configured to control a flow rate.

In the present disclosure, when a value obtained by dividing a flow rate of the concentrated gas branched off into the recirculation flow path by a flow rate of the concentrated gas in the desorption gas flow path is defined as a recirculation rate, the recirculation rate may be controlled based on the concentration of the gaseous substances introduced into the adsorption region.

In the present disclosure, at least one of the exhaust gas flow path, the desorption gas flow path, the recirculation flow path, and the discharge flow path may be provided with a concentration sensor.

The recirculation rate may be controlled based on the concentration of contaminant components measured by the concentration sensor.

In the present disclosure, the recirculation rate may be set within various ranges depending on the required performance. If the recirculation rate is low, the effect of circulation may be reduced. Conversely, if the recirculation rate is high and the gas contains combustible substances, safety issues may arise. Therefore, the recirculation rate may be appropriately limited. The recirculation rate to be set may be determined in consideration of the introduced concentration, safety, and the final treatment mechanism for the gas, all of which are interrelated. The significant level of recirculation rate may be set within a range of 1% to 99.9%, and may be set, for example, within a range of 5% or more, specifically within a range of 5% to 99.9%.

In the present disclosure, the functional regions of the adsorption member may further include a purge region, and a purge flow path configured to introduce a purge gas into the purge region.

In the present disclosure, the functional regions of the adsorption member may further include a purge region, and gas flows that have passed through the cooling region and the purge region may be mixed and introduced into the desorption gas flow. In this case, the gas flows introduced into the cooling region and the purge region may include external air, exhaust gas, or purified exhaust gas.

### [Advantageous Effects]

According to the present disclosure, by adsorbing gaseous substances at a high flow rate and low concentration using a concentration unit having a plurality of functional regions, and by recirculating a portion of the concentrated gas desorbed using a heat source, the low-concentration gaseous substances may be concentrated to a high concentration and then supplied to combustion, recovery, or condensation treatment units, and energy savings and effective removal of the gaseous substances may be achieved.

According to the present disclosure, even though a portion of the desorbed gas that is adsorbed and then desorbed in the concentration unit is recirculated to concentrate the gaseous substances, an increase in energy consumption required for desorption may be suppressed.

In addition, according to the present disclosure, since a portion of the high-concentration gas desorbed after being adsorbed in the concentration unit is recirculated and further concentrated to a high level without re-adsorption, the concentration ratio of the gaseous substances may be improved.

### [Description of Drawings]

FIG. 1 is a view schematically illustrating a concentration apparatus for highly concentrating gaseous substances and treating the same according to an embodiment of the present disclosure.
FIG. 2 is a conceptual view illustrating that a cross section of an adsorption member of the concentration apparatus is partitioned into a plurality of functional regions.
FIG. 3 is a view schematically illustrating an example of a gaseous substance treatment apparatus according to an embodiment of the present disclosure.

### [Mode for Invention]

Hereinafter, the present disclosure will be described in detail with reference to the drawings.

Preferred embodiments of the present disclosure will be described in detail below with reference to the accompanying drawings. In describing the present disclosure, detailed descriptions of well-known configurations or functions will be omitted when it is determined that such descriptions may obscure the gist of the present disclosure.

Herein, the term "gaseous substance" is used to collectively refer to not only volatile organic compound components such as organic solvents including, for example, toluene and N-methyl-2-pyrrolidone (NMP), but also contaminant components such as odor components, and harmful components such as CO₂ and NOₓ. In addition, the gaseous substance may include water vapor. Accordingly, herein, the term "gaseous substance" may refer to different components depending on the type of gaseous substance. For example, it may refer only to odor components, to specific gaseous substance components, or to both odor components and other harmful components.

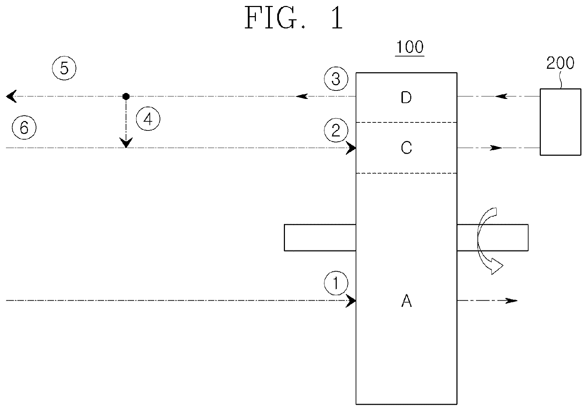

FIG. 1 is a schematic side view illustrating a concentration apparatus according to an embodiment of the present disclosure.

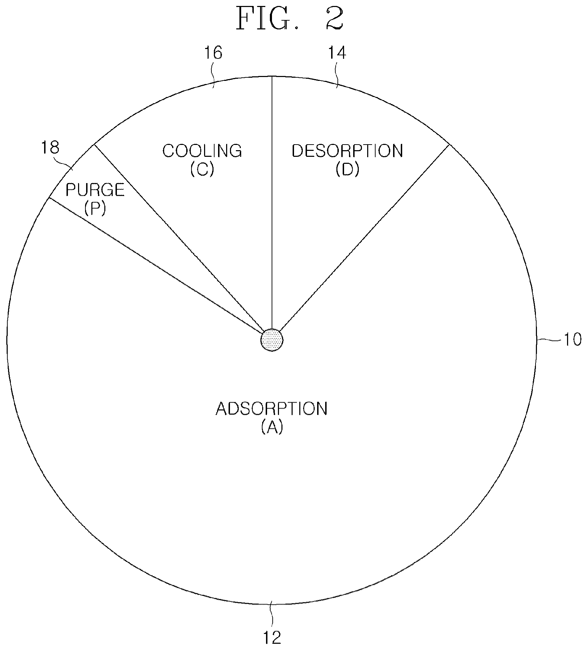

Referring to FIG. 1, a concentration apparatus 100 may include an adsorption member 10 (FIG. 2) that forms a plurality of functional regions configured to adsorb, concentrate, and desorb a gaseous substance, and a driving unit configured to relatively rotate the adsorption member with respect to the gaseous substance.

The concentration apparatus 100 provides a plurality of gas flow paths. As illustrated, appropriate flow paths are configured to provide, for example, an exhaust gas flow ① from a contamination source (or emission source) passing through the internal adsorption member, a desorption gas flow ③ in which gaseous substances adsorbed are desorbed, and a cooling gas flow ② for cooling a region of the adsorption member heated after desorption. In addition, appropriate flow paths are provided such that a portion of the desorption gas flow ③ branched off as a recirculation flow ④ and joins the cooling gas flow ②, while allowing the remaining portion to be discharged as an exhaust flow ⑤.

In the present disclosure, various sources may be used as a supply source ⑥ for the cooling gas. For example, external air, exhaust gas from a contamination source, or purified gas may be used. Here, the external air may include clean atmospheric air, air with an adjusted oxygen concentration, or, in cases where the gaseous substance is a combustible substance, a non-reactive inert gas such as nitrogen, carbon dioxide, or helium.

In the present disclosure, the concentration apparatus 100 may be provided with appropriate gaseous substance transfer units, sensors, gas inlets, gas outlets, and a housing. Appropriate valves, ducts, and air blowing units may be provided for branching the recirculation flow and the exhaust flow. In the present disclosure, the plurality of flow paths passing through the adsorption member are separated and/or partitioned by appropriate sealing units so that gas flows between the flow paths do not interfere with each other. For example, the gas flows in the respective flow paths may be separated and partitioned by disposing a silicone resin, a heat-resistant polymer, or a metal or ceramic material between the housing and the adsorption member.

FIG. 2 conceptually illustrates that an adsorption region A, a cooling region C, and a desorption region D of the concentration apparatus are separated and partitioned.

Meanwhile, as illustrated in FIG. 1, a cooling gas flow ② that has passed through the cooling region C is further heated through a desorption unit 200 and introduced into the desorption region D. The desorption unit 200 of the present disclosure may be implemented as a part of the concentration apparatus 100 or as a separate and independent component.

In FIG. 1, exemplary directions of gas flows are illustrated for the gas flow paths ①, ②, and ③. Of course, the present disclosure is not limited thereto. At least one of the gas flows in the respective flow paths may have a direction opposite to that illustrated.

The concentration apparatus of FIG. 1 may employ a cylindrical adsorption member 10, as illustrated in FIG. 2, as an adsorption and concentration unit for gaseous substances.

The adsorption member 10 may be formed of a suitable material having heat storage and gas adsorption properties. In general, the adsorption member may be formed by coating an adsorbent with excellent adsorption performance onto a base material made of ceramic fiber, glass fiber, or a corrugated metal sheet of aluminum or stainless steel. Of course, the present disclosure is not limited thereto, and the adsorption member 10 may be made of a single material selected from the group consisting of zeolites such as 3A, 4A, USY, or ZSM-5, metal-organic frameworks (MOFs), activated carbon, activated carbon fiber, carbon nanotubes (CNTs), graphene, alumina, silica, and polymer resins, or a composite material of two or more of the selected materials.

In addition, the adsorption member may be implemented in a packed form using spherical, amorphous, cylindrical, or honeycomb-type adsorbents, or may also be implemented as a honeycomb-shaped adsorption member with improved air permeability and contact area by forming a laminated adsorption material using bent, extruded, or sheet-type adsorbents.

The adsorption member may be configured as a multi-stage adsorption member. For example, the adsorption member may include a front-end member facing the exhaust gas flow and a rear-end member adjacent thereto, and the front-end member and the rear-end member may be made of different materials. For example, the front-end member may include a single material selected from the group consisting of silica, zeolite 3A, zeolite 4A, and diatomaceous earth, which are hydrophilic adsorbents with excellent moisture adsorption properties. The rear-end member may mainly include a hydrophobic zeolite having a Si/Al molar ratio of 15 or more (e.g., USY or ZSM-5), which has relatively low moisture adsorption capability but excellent adsorption capability for volatile organic compounds.

FIG. 2 is a view schematically illustrating a cross-section of an adsorption member 10 according to the present disclosure.

In the present disclosure, the plurality of regions described above may be defined as areas in a direction substantially perpendicular to the directions of gas flows flowing through the flow paths ①, ②, and ③ described with reference to FIG. 1. For example, the area of each region may be defined by a cross-sectional area perpendicular to the axial direction of the concentration apparatus.

The plurality of regions may include functional regions such as an adsorption region 12, a desorption region 14, and a cooling region 16, by way of example.

In the adsorption member of the present disclosure, the areas occupied by the adsorption region 12, the desorption region 14, and the cooling region 16 may be appropriately partitioned. In general, the area of the adsorption region 12 may preferably occupy 40% to 90% of the total area of the adsorption member 10. Accordingly, the adsorption region 12 may have a larger area than the desorption region 14 or the cooling region 16. In addition, the desorption region 14 and the cooling region 16 may be designed to have the same area, or the desorption region 14 may be designed to be smaller than the cooling region 16.

Preferably, in the present disclosure, the areas may satisfy the relationship: adsorption region area > cooling region area ≥ desorption region area. Specifically, in the present disclosure, the ratio of the cooling region area to the desorption region area may be 1.05 or greater, 1.1 or greater, or 1.2 or greater. In addition, the upper limit of the area ratio may be limited to 1.5, 2.0, or 3.0. An excessive area ratio exceeding this range may not have a significant effect on improving energy recovery efficiency and is therefore disadvantageous from an economic standpoint.

The purge region indicated in FIG. 2 may be considered as an expanded portion of the above-described cooling region, but it may also be regarded as an additional region separate from the cooling region. When the recirculation rate increases or when the temperature and concentration of the concentrated gas discharged from the desorption region increase, purging the gas may be necessary, and a region for cooling or recovering the temperature may be required. For this purpose, the purge region may be additionally provided. In this case, the purge gas introduced into the purge region may be a single gas selected from external air, exhaust gas, and purified exhaust gas, or a mixed gas thereof. Here, external air may include clean atmospheric air, air with an adjusted oxygen concentration, or an inert gas such as nitrogen, carbon dioxide, or helium in cases where the gaseous substance is a combustible material.

In the present disclosure, the adsorption member 10 may function as a plurality of partitioned regions, such as an adsorption region 12, a desorption region 14, and a cooling region 16, during operation, and these regions may be isolated or separated by sealing units.

Meanwhile, as illustrated, the functional regions of the adsorption member 10 in the present disclosure may further include a purge region.

### Modes for Carrying out the Invention

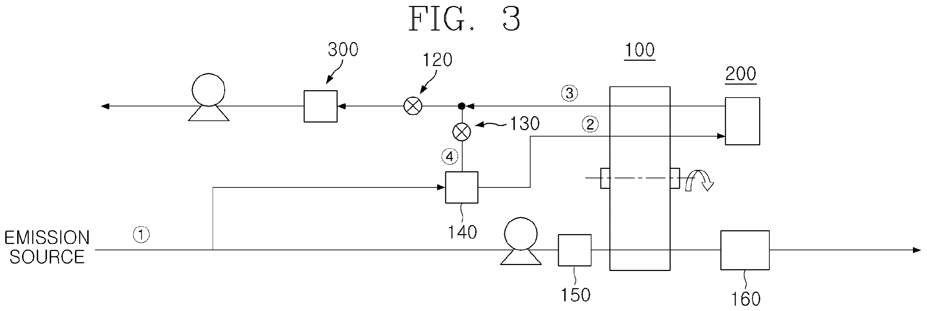

FIG. 3 is a view schematically illustrating an example of a gaseous substance treatment apparatus for highly concentrating gaseous substances from a high-flow, low-concentration gaseous substance emission source according to an embodiment of the present disclosure.

Referring to FIG. 3, the gaseous substance treatment apparatus includes a concentration apparatus 100, a desorption unit 200, and a concentrated gas treatment unit 300.

As illustrated in FIG. 3, gaseous substances, i.e., contaminated or harmful components included in the exhaust gas introduced from the emission source, are adsorbed onto the adsorbent of the adsorption member 10 of the concentration apparatus 100 as the exhaust gas passes through the concentration apparatus 100. The concentration apparatus 100 is preferably a rotor-type adsorption and concentration unit capable of adjusting the rotation speed depending on the concentration of the incoming gaseous substances. In this embodiment, the concentration apparatus 100 may rotate at a speed of 2 to 20 rph.

As described above, gaseous substances contained in the exhaust gas from the emission source are introduced into the concentration apparatus 100 and adsorbed onto the adsorption member 10 in the adsorption region A. As the rotor rotates, the adsorption member 10 that has adsorbed the gaseous substances is introduced into the desorption region B and is desorbed by desorption air. At this time, the flow rate of the desorption gas is lower than that of the exhaust gas introduced into the adsorption region. Preferably, the ratio of the desorption gas flow rate to the adsorption gas flow rate is between 1/3 and 1/30. Accordingly, the desorption gas may contain gaseous substances at a concentration 3 to 30 times higher than that of the adsorption gas. The ratio of the flow rate of the exhaust gas introduced into the adsorption region and the flow rate of the desorption gas may be adjusted in proportion by controlling the desorption gas transfer unit depending on the concentration. However, when the amount of desorption gas is reduced excessively and the desorption energy required for desorbing the gaseous substances is not delivered, desorption will not occur, and therefore, the flow rate needs to be appropriately controlled.

Meanwhile, in the present disclosure, the exhaust gas from the emission source may be used as the cooling gas. In this case, as illustrated, a portion of the exhaust gas from the emission source is branched off from the exhaust gas flow ① and joins the cooling gas flow. The ratio of the cooling gas flow branched off from the exhaust gas flow ① determines the content of contaminant components in the desorption gas. Accordingly, this ratio may define the concentration ratio. For example, the proportion of the exhaust gas used as the cooling gas is determined based on the amount of the desorption gas and the recirculation rate. Although the flow rate ratio of the exhaust gas flow rate to the desorption gas flow rate is not particularly limited, the amount should be sufficient to provide the energy required for desorbing the adsorbed gaseous substances. In general, a flow rate ratio of 3 to 30 is mainly used in the field. When the recirculation rate is 50% (i.e., when 50% of the desorption gas is recirculated as the cooling gas), the flow rate ratio of the exhaust gas flow rate to the branched cooling gas flow rate increases to 6 to 60.

The concentration apparatus of the present disclosure includes a desorption unit 200 configured to heat the desorption gas. In the present disclosure, a heating mechanism, such as a heater, microwave, or plasma, or a vibration unit, such as an ultrasonic vibrator, may be used as the desorption unit 200. Of course, the present disclosure is not limited thereto, and various desorption units may be used. However, an electric heater, a burner, or hot air is preferably used as the heating mechanism.

As described above with reference to FIG. 1, a portion of the desorbed desorption gas is branched off and joins the cooling gas flow. This branching mechanism may include a duct and a valve.

FIG. 3 illustrates an exhaust duct 120 and a recirculation duct 130 as an example of a branching mechanism for desorption gas. In the present disclosure, the exhaust duct and the recirculation duct may each include a flow rate control unit such as a valve.

In the present disclosure, the exhaust recirculation gas flow ④ passing through the recirculation duct contains gaseous substances at a high concentration, which are more concentrated than those in the exhaust gas flow ①. In the present disclosure, the concentration level may be determined based on the concentration ratio and the recirculation rate. For example, in the present disclosure, when the ratio of the desorption gas to the exhaust gas from the emission source is 15 (see Table 2), the concentration level may be increased up to 300 times by varying the recirculation rate from 5% to 95%. Considering an actual treatment efficiency of 95%, 0.25 g/Nm³ of exhaust gas may be concentrated to 71.262 g/Nm³, resulting in a concentration ratio of up to 285 times.

Accordingly, the cooling gas flow ② mixed with such concentrated exhaust gas contains gaseous substances at a high concentration.

The cooling gas flow ② is heated by the desorption unit 200 and introduced into the desorption region B of the adsorption member 10 to desorb the adsorbed gas, so that the desorption gas flow ③ is further concentrated. As such, the concentration of contaminant components in the exhaust gas recirculation flow ④, the cooling gas flow ②, and the desorption gas flow ③ increases by the repetition of adsorption, cooling, and desorption, and reaches a certain concentration, that is, an equilibrium concentration, selected by the operator after several repetitions.

When oxygen is present, combustible substances pose a risk of fire or explosion and therefore should be managed below their lower explosive limit ("LEL"). For safety, however, it is desirable to manage the combustible substances at a level of 25% of the LEL. Since the LEL varies depending on the ambient temperature, the effect of temperature should also be considered when setting this limit. However, if there is no such risk, the LEL may also be set to a level suitable for condensation, recovery, or oxidation.

In general, when desorption is performed by heating, the temperature of the desorption gas should be higher than the adsorption temperature, preferably in the range of 100 °C to 300 °C. The temperature of the desorption gas may vary depending on the characteristics of the gaseous substance to be adsorbed and the adsorption member.

Meanwhile, in the present disclosure, a portion or all of the desorption gas may be subjected to heat exchange in order to use the desorption gas as a recirculation flow. For example, when desorption is performed at a gas temperature of 220 °C, the concentrated gas after desorption transfers heat to a member in the desorption region and is discharged at a temperature of about 40 to 100 °C or lower. When this gas is recirculated, because the temperature of the cooling gas may increase, it is necessary to lower the temperature of the desorbed gas to be recirculated. As the cooling units in this case, various units such as an air-cooled heat exchanger, a water-cooled heat exchanger, and a refrigerator may be used, but it is generally preferable to use a water-cooled heat exchanger. In the present disclosure, the installation position of the heat exchanger may be in a flow path branched for recirculation, or may be located upstream of the branching point where the recirculated gas and the exhausted gas are separated, in the cases of cooling, condensation, or recovery.

Through the above mechanism, low-concentration gaseous substances in the exhaust gas flow ① from the initial emission source may be introduced into the concentration apparatus, and, as the concentration rotor rotates, the gaseous substances repeatedly undergo adsorption, desorption, cooling, desorption, cooling, and desorption in that order, so that the exhaust gas flow may be gradually concentrated into gaseous substances of high concentration.

In the present disclosure, the concentration of the recirculated exhaust gas is higher than that of the incoming gas, and heat is transferred during the desorption process, resulting in the temperature and concentration of the cooling gas becoming higher than in the case where the gas is not circulated. In this case, if the exhaust gas with an increased concentration remains on the adsorption member and moves to the adsorption region, the exhaust gas may immediately pass through without being adsorbed in the adsorption region. Although the effect of this is not significant, a purge section that does not contain the circulated exhaust gas may be provided to eliminate such an effect and to lower the temperature. As illustrated in FIG. 2, external air, exhaust gas from the emission source, or purified gas may be used after being purged through introduction into the purge region 18. Here, the external air may include clean atmospheric air, air with an adjusted oxygen concentration, or, in cases where the gaseous substance is a combustible substance, a non-reactive inert gas such as nitrogen, carbon dioxide, or helium.

In this case, the gas flows that have passed through the cooling region and the purge region may be separated from each other or may join. Since the gases that have passed through the cooling region and the purge region may be mixed and heated by the heating unit and then introduced into the desorption region, it is not necessarily required to separate the gases into distinct sections. That is, since the gas that has passed through the purge region contains gaseous substances, there are several methods of sending the gas to the desorption flow, sending the gas to the adsorption region, and sending the gas directly to the upstream of the final treatment unit for gaseous substances, but the most preferable method is to send the gas to the desorption flow.

When the purge region is used, the gaseous substances may be concentrated while sequentially transitioning in the order of adsorption, desorption, cooling, purge, adsorption, desorption, cooling, and purge.

In the present disclosure, the concentration ratio of the gaseous substances in the discharged exhaust gas may be controlled by the recirculation rate, which is the percentage of the flow rate of the recirculation flow ④ relative to that of the desorption gas flow ③. In the present disclosure, the recirculation rate may be controlled based on the concentration of the gaseous substances in at least one of the following gas flows: the exhaust gas flow introduced from the emission source into the adsorption member, the recirculation gas flow introduced into the adsorption member (cooling region), and the gas flow that has passed through the adsorption member. In the present disclosure, the recirculation rate may range from 1% to 99.9%, and preferably from 5% to 95%. By way of example, the recirculation rate may be 5% or more, 10% or more, 15% or more, or 20% or more. In addition, the recirculation rate may be 95% or less, 90% or less, 85% or less, or 80% or less.

As an example, the concentration of the gaseous substances introduced or recirculated may be designed to remain below the LEL at which an explosion may occur due to the introduction of oxygen. Preferably, since the temperature of the exhaust gas containing combustible vapor that may cause an explosion is not constant, the present disclosure may be configured to control the recirculation flow ④ and the desorption gas flow ③ at a predetermined ratio, taking safety into account, so that the concentration is maintained at 1/4 to 1/5 of the LEL. For example, referring to Table 1, the LEL of toluene is 52.2 g/Nm³, and one-fourth of this value is 13.05 g/Nm³. If the concentration is to be controlled below 13.05 g/Nm³, and the initial concentration is 0.25 g/Nm³, since setting the recirculation rate to 80% allows the concentration to increase up to 14.263 g/Nm³, it is desirable to set the recirculation rate to a lower value. If the initial concentration is 0.5 g/Nm³ and the recirculation rate is 60%, the concentration may increase up to 14.275 g/Nm³. Thus, it is desirable to set the recirculation rate to a lower value.

The apparatus of the present disclosure may include a concentration sensor 150 configured to measure the concentration of the gaseous substances in order to control the recirculation rate. In FIG. 3, the concentration sensor is illustrated as being installed at the inlet of the adsorption member, but this is merely an example. The concentration sensor may be installed along an appropriate flow path of the concentration apparatus. By way of example, the concentration sensor may be installed at the downstream side of the mixing chamber, on the flow path of the desorption gas flow, at the upstream side of the adsorption member, or on both the desorption gas flow path and the cooling gas flow path. In addition, an additional concentration sensor 160 may be installed on the gas flow path that passes through the adsorption member. This downstream concentration sensor 160 is intended to control the adsorption efficiency so that the concentration at the downstream side of the adsorption member does not increase beyond a predetermined level.

Referring again to FIG. 3, the concentrated gas treatment unit 300 may be a condensation recovery device using cooling and compression, a secondary concentration recovery device using an adsorbent or absorbent, or an oxidation device such as an RTO, RCO, or RO configured to remove contaminant gases through combustion. In addition, when a condensation recovery device is used in the present disclosure, the primary treated gas recovered by the condensation recovery device may be supplied again to the adsorption region or the cooling region of the adsorption member for additional purification.

In the concentration apparatus of FIG. 3, if the concentration ratio is fixed at 12 times and the concentration level of contaminant components (equilibrium concentration, g/Nm³) is calculated according to the recirculation rate, the results are as illustrated in Table 1 (concentration ratio: 12 times). In this case, the concentration of contaminant components (g/Nm³) according to the recirculation rate was calculated by varying the inlet concentration of the exhaust gas flow discharged from an emission source containing oxygen in the range of 0.25 to 1.0 g/Nm³. The concentration of the contaminant components was calculated as the saturation concentration after several iterations. Toluene was assumed as a contaminant component, the LEL was set to 1.27%, and the safety standard was set to one-fourth of the LEL. The temperature effect on the LEL was disregarded. In addition, the treatment efficiency was assumed to be 95%. In Table 1 below, the left column indicates the recirculation rate (%) and the top row indicates the inlet concentration (g/Nm³).

**[Table 1]**

| Classification | 0.25 | 0.5 | 0.75 | 1 |
|---|---|---|---|---|
| 95% | 57.013 | 114.025 | 171.038 | 228.050 |
| 80% | 14.263 | 28.525 | 42.788 | 57.050 |
| 60% | 7.138 | 14.275 | 21.413 | 28.550 |
| 40% | 4.763 | 9.525 | 14.288 | 19.050 |
| 20% | 3.575 | 7.150 | 10.725 | 14.300 |
| 5% | 3.013 | 6.025 | 9.038 | 12.050 |
| 0% | 2.863 | 5.725 | 8.588 | 11.450 |

From the above table, it can be seen that the equilibrium concentration of toluene gradually increases as the recirculation rate increases from 0% to 95%. Meanwhile, when the concentration ratios are set to 15 times and 6 times, respectively, while keeping the other conditions the same, the results of the equilibrium concentration calculations are shown in Table 2 (concentration ratio: 15 times) and Table 3 (concentration ratio: 6 times) below.

**[Table 2]**

| Classification | 0.25 | 0.5 | 0.75 | 1 |
|---|---|---|---|---|
| 95% | 71.262 | 142.525 | 213.788 | 285.050 |
| 80% | 17.825 | 35.650 | 53.475 | 71.300 |
| 60% | 8.919 | 17.838 | 26.756 | 35.675 |
| 40% | 5.950 | 11.900 | 17.850 | 23.800 |
| 20% | 4.466 | 8.931 | 13.397 | 17.863 |
| 5% | 3.763 | 7.525 | 11.288 | 15.050 |
| 0% | 3.575 | 7.150 | 10.725 | 14.300 |

**[Table 3]**

| Classification | 0.5 | 1 | 1.5 | 2 |
|---|---|---|---|---|
| 95% | 57.025 | 114.050 | 171.075 | 228.100 |
| 80% | 14.275 | 28.550 | 42.825 | 57.100 |
| 60% | 7.150 | 14.300 | 21.450 | 28.600 |
| 40% | 4.775 | 9.550 | 14.325 | 19.100 |
| 20% | 3.588 | 7.175 | 10.763 | 14.350 |
| 5% | 3.025 | 6.050 | 9.075 | 12.100 |
| 0% | 2.875 | 5.750 | 8.625 | 11.500 |

### Industrial Applicability

The present disclosure is applicable to a device for concentrating and removing gaseous substances such as odors or volatile organic compounds discharged from, for example, industrial facilities.

## Claims

1. A concentration apparatus for concentrating gaseous substances, the concentration apparatus comprising:
an adsorption member configured to form a plurality of functional regions for adsorbing, concentrating, and desorbing gaseous substances in exhaust gas discharged from an emission source; and
a driving unit configured to relatively rotate the adsorption member with respect to the gaseous substances,
wherein the plurality of functional regions of the adsorption member include an adsorption region, a desorption region, and a cooling region,
wherein the concentration apparatus further comprises:
an exhaust gas flow path configured to introduce the exhaust gas from the emission source into the adsorption region;
a desorption gas flow path configured to discharge a concentrated gas from the desorption region;
a cooling gas flow path configured to introduce a cooling gas into the cooling region; and
a recirculation flow path configured to be branched off from the desorption gas flow path and to join the cooling gas flow path, and
wherein a portion of the concentrated gas in the desorption gas flow path is introduced into the cooling region through the recirculation flow path.

2. The concentration apparatus of claim 1, wherein, when a value obtained by dividing a flow rate of the concentrated gas branched off into the recirculation flow path by a flow rate of the concentrated gas in the desorption gas flow path is defined as a recirculation rate, the recirculation rate is controlled based on a concentration of contaminant components in the exhaust gas introduced into the adsorption region.

3. The concentration apparatus of claim 2, wherein at least one of the exhaust gas flow path, the desorption gas flow path, the recirculation flow path, and the discharge flow path is provided with a concentration sensor.

4. The concentration apparatus of claim 3, wherein the recirculation rate is controlled based on a concentration of contaminant components measured by the concentration sensor.

5. The concentration apparatus of claim 2, wherein the recirculation rate ranges from 1% to 99.9%.

6. The concentration apparatus of claim 1, wherein the functional regions of the adsorption member further include a purge region, and
wherein gas flows that have passed through the cooling region and the purge region are mixed and introduced into the desorption gas flow.

7. The concentration apparatus of claim 6, wherein the gas flows introduced into the cooling region and the purge region include external air, exhaust gas, or purified exhaust gas.

8. The concentration apparatus of claim 1, wherein the recirculation flow path is provided with a cooling unit.

9. The concentration apparatus of claim 1, wherein the desorption gas flow path is provided with a cooling unit.

10. The concentration apparatus of claim 1, further comprising:
a concentrated gas treatment unit,
wherein the concentrated gas treatment unit is a condensation recovery device using cooling and compression, a concentration recovery device using an adsorbent or absorbent, or an oxidation device configured to remove contaminant gases through combustion.

11. The concentration apparatus of claim 10, wherein a treated gas recovered by the condensation recovery device is supplied to the adsorption region or the cooling region of the adsorption member.
